# EUROPEAN PATENT SPECIFICATION

(11) **EP 3 318 810 B1**
(45) Date of publication and mention of the grant of the patent: **23.03.2022**
(21) Application number: 16817725.1
(22) Date of filing: 15.06.2016
(51) Int. Cl.: H04M 11/00, H04Q 9/00

(54) **OUTDOOR UNIT SETTING SYSTEM, OUTDOOR UNIT SETTING METHOD, AND OUTDOOR UNIT**
EINSTELLSYSTEM FÜR AUSSENEINHEIT, EINSTELLVERFAHREN FÜR AUSSENEINHEIT UND AUSSENEINHEIT
SYSTÈME DE RÉGLAGE D'UNITÉ EXTÉRIEURE, PROCÉDÉ DE RÉGLAGE D'UNITÉ EXTÉRIEURE ET UNITÉ EXTÉRIEURE

(30) Priority: 30.06.2015 JP 2015131662
(43) Date of publication of application: 09.05.2018
(73) Proprietor: Toshiba Carrier Corporation, Kawasaki-shi, Kanagawa 212-8585 (JP)
(72) Inventor: KOIZUMI, Tetsuya, Fuji-shi Shizuoka 416-8521 (JP); YAMADA, Yoshihiro, Fuji-shi Shizuoka 416-8521 (JP); KOMAZAKI, Nariya, Fuji-shi Shizuoka 416-8521 (JP)
(74) Representative: Gramm, Lins & Partner Patent- und Rechtsanwälte PartGmbB
(86) International application number: PCT/JP2016/067761
(87) International publication number: WO 2017/002616

(56) References cited:
- EP-A2- 2 479 735
- JP-A- 2003 004 281
- JP-A- 2005 265 286
- JP-A- 2006 132 870
- JP-A- 2006 132 870
- JP-A- 2014 127 014
- US-A1- 2006 053 315
- US-A1- 2007 157 170
- US-A1- 2011 141 098
- US-A1- 2014 324 195

## Description

### Technical Field

Embodiments described herein relate generally to an outdoor unit setting system, an outdoor unit setting method and an outdoor unit.

### Background Art

A system which includes a communication unit having the function of short-range wireless communication called near-field communication in an outdoor unit of an air conditioning apparatus and is configured to set various data related to the operation of the outdoor unit and assess the state of the outdoor unit by contactless communication between the communication unit and an information terminal has been known.

A manager and serviceman of the air conditioning apparatus can make the setting of the outdoor unit, etc., simply by moving closer to the outdoor unit and bringing the information terminal in hand closer to the communication unit of the outdoor unit.

### Citation List

### Patent Literature

Patent Literature 1: JP 5197549 B
Patent Literature 2: EP 2 479 735 A2 discloses a household electrical appliance system and a radio setting method. The electrical appliance system includes two household electrical appliances. The first appliance includes an input unit receiving an input for instructing start of radio setting processing with a pairing button, and a radio setting unit that transmits a radio setting request and carries out the radio setting processing for radio communication with the second appliance.
Patent Literature 3: US 2014/0324195 A1 discloses a control system with an electric apparatus and a control unit. The electric apparatus operates in a first mode which is controlled based on an instruction from a user and in a second note in which operational status is automatically managed. The control unit disables the second mode when receiving an instruction to disable the second mode and operates the electric apparatus which operates in the first mode and the second mode, in the first mode.
Patent Literature 4: JP 2006-132870 A discloses a maintenance system for an air conditioner comprising the air conditioner, a maintenance server and a portable information terminal. An indoor unit of the air conditioner has a receiving part capable of communicating with the portable information terminal, a rewritable memory storing predetermined information receiving by the receiving part, an a control means for controlling writing and reading of the memory and the operation of the air conditioner. The portable information terminal accesses the server to download to predetermined model information, and transmits the model information to the receiving part of the outdoor unit. The control means rewrites the contents of the memory with the model information received by the receiving part.
Patent Literature 5: From US 2011/0141098 A1 a voltage amplifier circuit is known which comprises an input voltage generating unit, an operational amplifier, a feedback resister unit, a selector control unit, and a selector.
Patent Literature 6: US 2007/0157170 A1 discloses systems, software and methods for utilizing application system configuration packages.

### Summary of Invention

The invention is defined by the independent claims. Embodiments are defined in the dependent claims. Technical Problem

In the case of making the setting of the outdoor unit using the above-described system, etc., it is the manager and serviceman of the air conditioning apparatus who actually do the work.

However, since the outdoor unit is installed outdoors, not only the manager and serviceman but also anyone can come closer to the outdoor unit. Therefore, a third person may come closer to the outdoor unit and make an unauthorized change to preset data.

Embodiments described herein aim to provide an outdoor unit setting system, an outdoor unit setting method and an outdoor unit which can prevent an unauthorized change to preset data, etc., and achieve a high level of security and a high degree of reliability.

### Solution to Problem

According to one embodiment, an outdoor unit setting system includes an outdoor unit comprising a first communication unit, and an information terminal comprising a second communication unit, and makes a setting of the outdoor unit by contactless communication between the first communication unit and the second communication unit. The outdoor unit includes a first controller which notifies time information related to time elapsed from application of power to the outdoor unit, to the information terminal by the contactless communication. The information terminal includes a second controller which permits the setting of the outdoor unit made by the information terminal during a period until the elapsed time reaches certain time based on the time information notified from the outdoor unit.

### Brief Description of Drawings

- FIG. 1: - is a diagram showing the external appearance of an outdoor unit according to an embodiment.
- FIG. 2: - is a block diagram showing the main structural elements of an outdoor unit setting system according to an embodiment.
- FIG. 3: - is a diagram showing an example of the relationship of a first switch and a second switch with respect to a state of restriction.
- FIG. 4: - is a flowchart showing an example of the operation of an outdoor unit of an embodiment.
- FIG. 5: - is a flowchart showing an example of the operation of an information terminal according to an embodiment.
- FIG. 6: - is a block diagram showing the main structural elements of an outdoor unit setting system according to another embodiment.

### Mode for Carrying Out the Invention

An embodiment will be described hereinafter with reference to the accompanying drawings. In the present embodiment, an outdoor unit constituting an air conditioning apparatus together with an indoor unit arranged indoors, an outdoor unit setting system including the outdoor unit, and an outdoor unit setting method for setting the outdoor unit will be described by way of example. However, the outdoor unit may constitute another refrigeration cycle apparatus such as a chiller or hot-water supply apparatus.

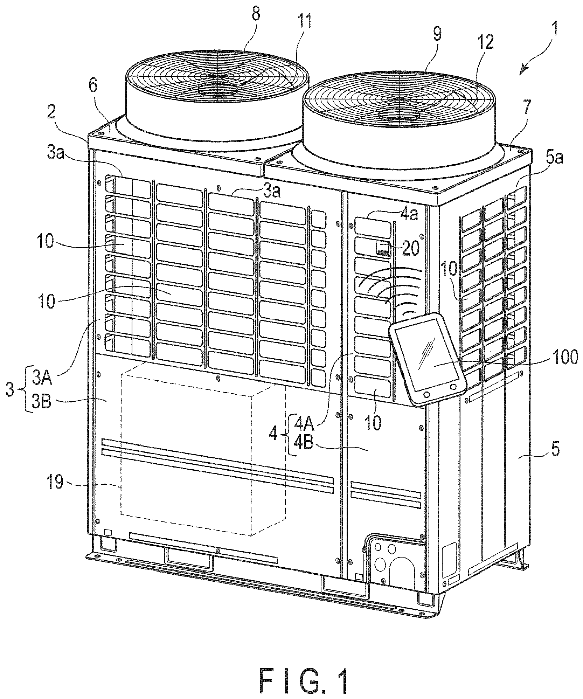

FIG. 1 is a perspective diagram showing an example of the external appearance of the outdoor unit according to the present embodiment. As shown in the drawing, a housing 2 of an outdoor unit 1 includes a left front plate 3, a right front plate 4, a right plate 5, top plates 6 and 7, a left plate, a left back plate, a right back plate and a bottom plate. For example, all the plates other than the top plates 6 and 7 are made of metal. Although not shown in the drawing, the left back plate and the right back plate are provided such that the left back plate is large in the width direction and the right back plate is small in the width direction, similarly to the relationship between the left front plate 3 and the right front plate 4.

The left front plate 3 is separated into an upper part and a lower part, and an upper left front plate 3A has a number of rectangular air vents (air inlets) 3a arranged in the vertical direction and the horizontal direction. Similarly, the right front plate 4 is separated into an upper part and a lower part, and an upper right front plate 4A has a number of rectangular air vents (air inlets) 4a arranged in the vertical direction. The right plate 5 has a number of rectangular air vents (air inlets) 5a arranged in the vertical direction and the horizontal direction. Similarly, the left plate, and the left back plate and the right back plate have a number of air vents (air inlets), respectively. The top plates 6 and 7 have circular exhaust outlets, respectively, and circular fan housings 8 and 9 are formed in such a manner as to cover the exhaust outlets, respectively.

Further, the inside of the housing 2 is separated into an upper heat exchanger compartment and a lower machine compartment by an intermediate partition plate which is not shown in the drawing. An outdoor unit heat exchanger 10 and outdoor fans 11 and 12 are accommodated in the heat exchanger compartment. The outdoor heat exchanger 10 is provided on the intermediate partition plate and is arranged along and near the left plate, the left front plate 3, the right front plate 4, the right plate 5, the right back plate and the left back plate. The outdoor fans 11 and 12 are provided in the fan housings 8 and 9, respectively.

An electrical component box 19 is provided in the machine compartment, and the electrical component box 19 accommodates components of a refrigeration cycle such as a compressor, a four-way valve, a receiver tank and an accumulator, and an outdoor unit circuit board 30 which will be described later. Further, the front side of the machine compartment is covered with a lower left front plate 3B and a lower right front plate 4B. At the time of replacement and repair of components in the machine compartment, etc., these lower front plates 3B and 4B are removed. In particular, the electronic component box 19 is arranged in a location opposed to the lower left front plate 3B, and at the time of the setting of a switch module 40 which will be described later, the lower left plate 3B is removed. At the time of replacement and repair of components provided on the back side, etc., the lower parts of the left back plate and the right back plate are removed.

When the outdoor fans 11 and 12 are rotated, outside air is drawn into the housing 2 through the air vents of the left plate, the left front plate 3, the right front plate 4 and the right plate 5, respectively. The indrawn outside air passes through the outdoor heat exchanger 10 and is discharged from the housing 2 through the outdoor fans 11 and 12 and the fan housings 8 and 9. The outdoor air which passes through the outdoor heat exchanger 10 exchanges heat with a refrigerant which flows through the outdoor heat exchanger 10.

Further, a first communication unit 20 is provided between the front plate 4 and the outdoor heat exchanger 10, and for example, in a location corresponding to the second top air vent 4a of the front plate 4. More specifically, the first communication unit 20 includes an attachment member with respect to the outdoor heat exchanger 10, and is supported on the front part of the outdoor heat exchanger 10 by the attachment member. The location of the second top air vent 4a in the height direction corresponds to about the eye level of the worker standing beside the housing 2.

The first communication unit 20 performs contactless data communication with an information terminal 100 coming into an extremely short distance range of, for example, about 1 cm to 10 cm by the technology of short-range wireless communication called near-field communication (NFC).

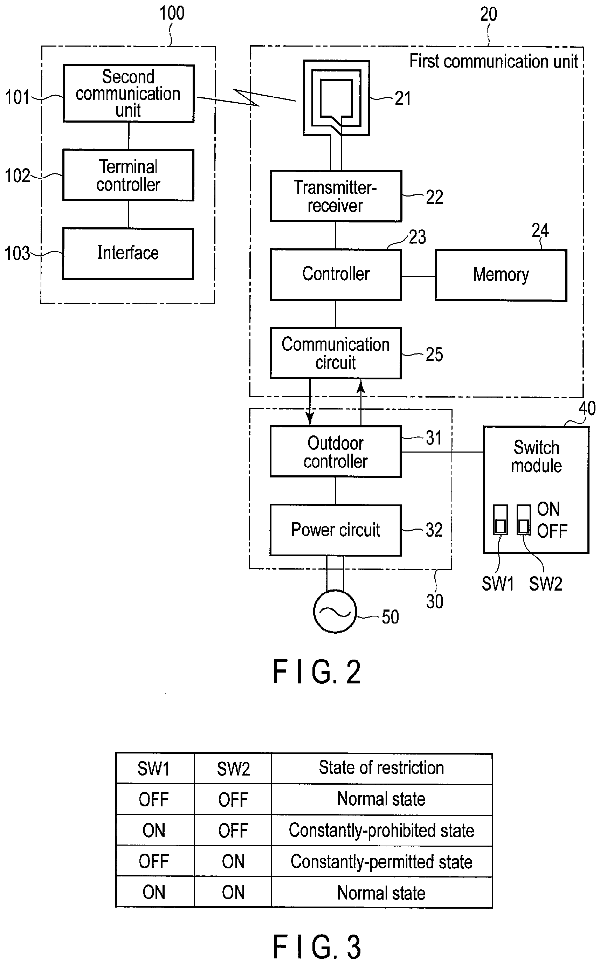

FIG. 2 is a block diagram showing the main structural elements of the outdoor unit setting system according to the present embodiment. In the example shown in the drawing, the outdoor unit setting system comprises the first communication unit 20 provided in the outdoor unit 1, the outdoor unit circuit board 30, the switch module 40 and the information terminal 100.

The first communication unit 20 includes an antenna 21, a transmitter-receiver 22, a controller 23, a memory 24 and a communication circuit 25. The antenna 21 transmits and receives radio waves. The transmitter-receiver 22 transmits and receives a signal via the antenna 21 and takes electrical power generated by electromagnetic induction which occurs when the antenna 21 receives radio waves, as the operating power of the first communication unit 20. The controller 23 executes various processing for data communication. The memory 24 stores a computer program necessary for the processing of the controller 23 and temporarily stores received data and transmitted data. The communication circuit 25 performs wired data communication between the controller 23 and an outdoor controller 31.

The first communication unit 20 may further include an outside air temperature sensor which detects the temperature of outside air.

For example, the outdoor unit circuit board 30 and the switch module 40 are provided in the electrical component box 19. The outdoor unit circuit board 30 is equipped with the outdoor controller 31 (first controller) and a power circuit 32. The outdoor controller 31 includes a processor and a memory. Further, the outdoor controller 31 executes operation control of the outdoor unit 1 in cooperation with the indoor unit, and processing related to the settings of the outdoor unit 1, the indoor unit, etc., by causing the processor to execute a computer program stored in the memory. The power circuit 32 is connected to a power 50 in a building via a power cable, and takes alternating-current power from the power 50 as the operating power of the outdoor unit 1. The power 50 is, for example, commercial alternating-current power.

The user and the manager and serviceman of the air conditioning apparatus can easily enter but the other people cannot enter the building in which the power 50 is installed. For example, the building in which the power 50 is installed is under security control and only allows entry of the user and the manager and serviceman of the air conditioning apparatus who are registered beforehand. Therefore, the operations of application and cutoff of the power 50 can be performed by the user and the manager and serviceman of the air conditioning apparatus but cannot be performed by the third person.

The switch module 40 is a mechanical switch such as a DIP switch or rotary switch, and includes a first switch SW1 and a second switch SW2. The first switch SW1 and the second switch SW2 are manually operated with a finger, for example, and can be switched between two states, namely, on and off. The switch module 40 is provided in the machine compartment together with the outdoor unit circuit board 30, for example.

The information terminal 100 includes a second communication unit 101, a terminal controller 102 (second controller) and an interface 103. The second communication unit 101 includes an antenna, a transmitter-receiver, a controller, a memory, a communication circuit, etc., similarly to the first communication unit 20, and performs contactless communication with the first communication unit 20 via radio waves.

The terminal controller 102 includes a processor and a memory. The terminal controller 102 executes processing related to the setting of the outdoor unit 1, etc., by causing the processor to execute a computer program stored in the memory. The above-described computer program is installed in the information terminal 100 as an application, for example. The function as the application may also be provided by a cloud.

The interface 103 notifies information to the user of the information terminal 100 and receives an input from the user, and includes a display equipped with a touch sensor, a speaker, a lamp, a push button, etc.

The state of restriction on the setting of the outdoor unit 1 can be switched by the first switch SW1 and the second switch SW2 of the switch module 40. FIG. 3 is a diagram showing an example of the relationship of the first switch SW1 and the second switch SW2 with respect to the state of restriction. In the example shown in the drawing, the state of restriction is a normal state if both the first switch SW1 and the second switch SW2 are off or on, the state of restriction is a constantly-restricted state if the first switch SW1 is on and the second switch SW2 is off, and the state of restriction is a constantly-permitted state if the first switch SW1 is off and the second switch SW2 is on.

The outdoor controller 31 has the following functions (1) and (2) as the main functions related to the setting of the outdoor unit 1.
(1) The function of notifying (transmitting) time information about time elapsed from the application of the power 50 to the outdoor unit 1, to the information terminal 100 by contactless communication between the first communication unit 20 and the second communication unit 101.
(2) The function of notifying the state of restriction specified by the switch module 40, that is, the normal state, the constantly-restricted state and the constantly-permitted state to the information terminal 100 by the above-described contactless communication.
   On the other hand, the information terminal 100 has the following functions (3), (4) and (5) as the main functions related to the setting of the outdoor unit 1.
(3) The function of permitting the setting of the outdoor unit 1 made by the information terminal 100 during the period from the application of the power 50 to the outdoor unit 1 until the elapse time reaches certain time based on the time information notified from the outdoor unit 1. In the present embodiment, this function is enabled if the normal state is notified from the outdoor unit 1 as the state of restriction.
(4) The function of rejecting the setting of the outdoor unit 1 made by the information terminal 100 regardless of the time elapsed from the application of the power 50 to the outdoor unit 1, if the constantly-prohibited state is notified form the outdoor unit 1 as the state of restriction.
(5) The function of accepting the setting of the outdoor unit 1 made by the information terminal 100 regardless of the time elapsed from the application of the power 50 to the outdoor unit 1, if the constantly-permitted state is notified from the outdoor unit 1 as the state of restriction.

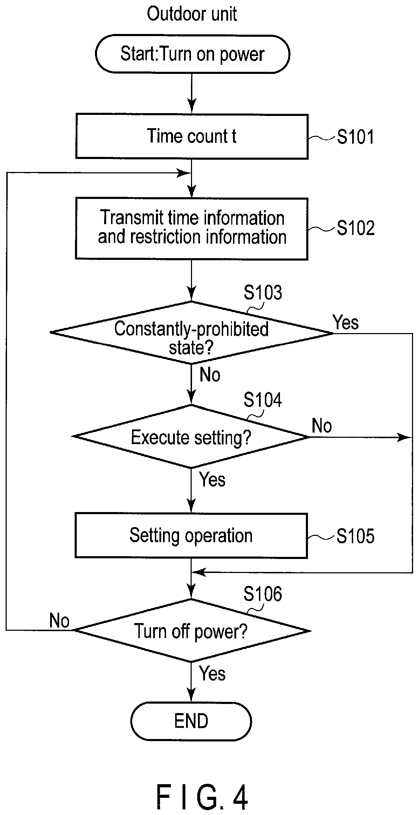

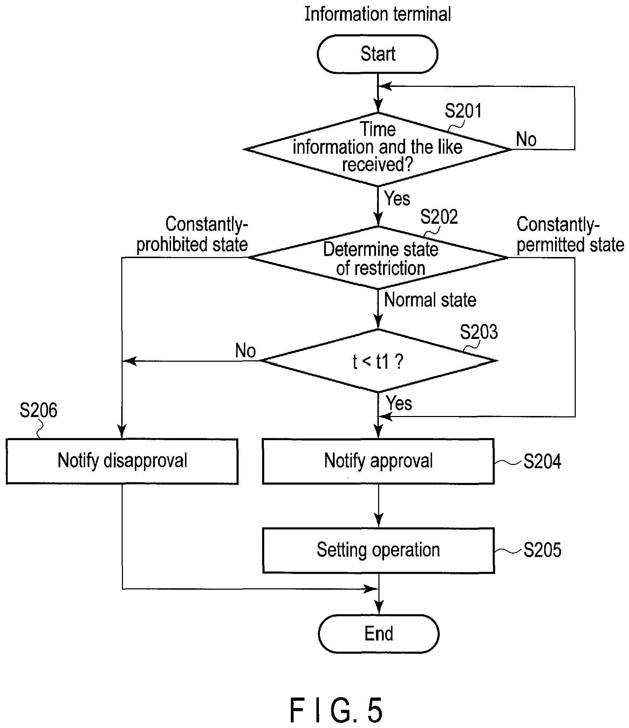

Next, specific examples of the operations of the outdoor unit 1 and information terminal 100 with these functions will be described with reference to FIGS. 4 and 5.

In such a case as installation, relocation, and maintenance and inspection of the outdoor unit 1 where various settings of the outdoor unit 1 are required, the manager and serviceman of the air conditioning apparatus enters the building provided with a control panel for applying the power 50 to the outdoor unit 1, etc., and applies the power 50 into the outdoor unit 1. The manager and serviceman of the air conditioning apparatus will be hereinafter referred to simply as a worker. After applying the power 50 into the outdoor unit 1, the worker moves to the installation location of the outdoor unit 1. The worker has the information terminal 100 and makes the setting of the outdoor unit 1 by the information terminal 100.

FIG. 4 is a flowchart showing an example of the operation of the outdoor unit 1. If the power 50 is applied (turned on), the outdoor controller 31 of the outdoor unit 1 starts time count t from zero (Step S101). The time count t corresponds to time elapsed from the application of the power 50 to the outdoor unit 1.

Subsequently, if the information terminal 100 is close to the first communication unit 20, the outdoor controller 31 transmits time information and restriction information to the information terminal 100 by contactless communication between the first communication unit 20 and the second communication unit 101 (Step S102). The time information to be transmitted here is information indicating the time count t. Further, the restriction information to be transmitted here is information indicating the state of restriction specified by the switch module 40.

After Step S102, the outdoor controller 31 determines whether the state of restriction specified by the switch module 40 is the constantly-prohibited state or not (Step S103). If the state of restriction is not the constantly-prohibited state (NO in Step S103), the outdoor controller 31 determines whether to execute the setting of the outdoor unit 1 with reference to the information terminal 100 (Step S104).

For example, if the information device 100 requests a start of the setting of the outdoor unit 1 in Step S205 which will be described later, the outdoor controller 31 determines to execute the setting (YES in Step S104). In this case, the outdoor controller 31 executes processing related to the setting requested from the information device 100 by contactless communication between the first communication unit 20 and the second communication unit 101 (Step S105).

Here, the "setting" of the outdoor unit 1 includes, for example, change of various parameters related to the operation of the outdoor unit 1, update of a control program (firmware, etc.), shutdown of the indoor unit, trial operation, etc. For example, the above-described parameters include an outside air temperature, a refrigerant temperature, an operating frequency of the compressor, an address code of the indoor unit connected to the outdoor unit 1, an address code of another outdoor unit connected to the outdoor unit 1, etc. Further, the processing executed by contactless communication between the first communication unit 20 and the second communication unit 101 includes readout of various information (for example, operating information and error information) related to the outdoor unit 1, another outdoor unit connected to the outdoor unit 1 and the indoor unit, various assessments, etc. In the present embodiment, the readout and the assessments are also included in the concept of the "setting".

After Step S105, the outdoor controller 31 determines whether the supply of the power 50 to the outdoor unit 1 is cut off or not (Step S106). If the supply of the power 50 is not cut off (NO in Step S106), the operation of the outdoor controller 31 returns to Step S102. If the state of restriction is determined to be the constantly-prohibited state in Step S103 (YES in Step S103) or the setting of the outdoor unit 1 is determined not to be executed in Step S104 (NO in Step S104), the operation of the outdoor controller 31 proceeds to Step S106. In this way, the outdoor controller 31 repeats Steps S102 to S106 while the power 50 is being supplied. If the supply of the power 50 is cut off (YES in Step S106), the outdoor controller 31 ends the operation shown in the flowchart of FIG. 4.

FIG. 5 is a flowchart showing an example of the operation of the information terminal 100. When the application related to the setting is started, the terminal controller 102 of the information terminal 100 waits to receive the time information and the restriction information from the outdoor unit 1 (Step S201). If the worker brings the information terminal 100 closer to the first communication unit 20 in this state, as in Step S102 described above, the time information and the restriction information are transmitted by contactless communication between the first communication unit 20 and the second communication unit 101. If the terminal controller 102 receives the time information and the restriction information (YES in Step S201), the terminal controller 102 determines which of the normal state, the constantly-prohibited state and the constantly-permitted state is indicated by the restriction information as the state of restriction (Step S202).

If the state of restriction is the normal state (Normal state in Step S202), the terminal controller 102 determines whether the time count t indicated by the time information received from the outdoor unit 1 is less than certain predetermined time t1 (t < t1) (Step S203). The certain time t1 is longer than average time required for the worker to make the setting of the outdoor unit 1 and is set to about five to eight hours, for example. If the time count t is less than the certain time t1 (YES in Step S203), the terminal controller 102 notifies that the setting is permitted (Step S204). This notification is provided by displaying a message: "Data Setting Permitted" on a display provided in the interface 103, for example.

Subsequently, the terminal controller 102 requests the start of the setting of the outdoor unit 1 by contactless communication between the first communication unit 20 and the second communication unit 102 and executes the processing related to the setting of the outdoor unit 1 by this contactless communication (Step S205). The setting subjected to the processing here is the setting specified by the worker via the interface 103, for example. Step S205 concludes the operation of the terminal controller 102 in a case where the state of restriction is the normal state.

If the restriction state is the constantly-prohibited state in Step S202 (Constantly-prohibited state in Step S202), the terminal controller 102 notifies that the setting cannot be accepted (Step S206). This notification is provided by displaying a message: "Data Setting Prohibited" on the display provided in the interface 103, for example. Step S206 concludes the operation of the terminal controller 102 in a case where the state of restriction is the constantly-prohibited state. In this way, if the state of restriction is the constantly-prohibited state, the setting of the outdoor unit 1 is prohibited regardless of the time count t.

As shown in FIG. 4, if the state of restriction is constantly-prohibited state (YES in Step S103), the controller 31 skips Steps S104 and S105. Therefore, even if the prohibition of the setting is withdrawn without authorization in the information terminal 100, the outdoor unit 1 still rejects the setting.

If the state of restriction is the constantly-permitted state in Step S202 (Constantly-permitted state in Step S202), similarly to a case where the state of restriction is the normal state, the terminal controller 102 notifies that the setting is permitted (Step S204) and executes the processing related to the setting of the outdoor unit 1 (Step S205). Step S205 concludes the operation of the terminal controller 102 in a case where the state of restriction is the constantly-permitted state. In this way, if the state of restriction is the constantly-permitted state, the setting of the outdoor unit 1 is permitted regardless of the time count t.

In a case where the state of restriction is the normal state, as the case may be, the worker cannot complete the work within the certain time t1. In such a case, the worker only needs to enter the building, cut off (turn off) the power 50, and apply (turn on) the power 50 again instantly. The outdoor controller 31 stores the state immediately before the cutoff of the power 50, and when the power 50 is applied again, the outdoor controller 31 resumes the operation from the state immediately before the cutoff of the power 50 and starts the time count t from zero (Step S101). In this way, the worker can continue the uncompleted work. Alternatively, the information terminal 100 may notify the worker during the work that the elapsed time is approaching the certain time t1, and if the worker is less likely to complete the work within the certain time t1, the worker may be able to extend for predetermined time (for example, one hour) by operating the information terminal 100. This concludes the explanations of the specific examples of the operations of the outdoor unit 1 and the information terminal 100.

In the present embodiment, if the normal state is specified as the state of restriction, the setting of the outdoor unit 1 can only be made by the information terminal 100 until the time elapsed from the application of the power 50 to the outdoor unit 1 reaches the certain time t1. Therefore, after the elapse of the certain time t1 from the application of the power 50, even if the third person tries to perform communication with the first communication unit 20 by the information terminal 100, the data setting will not be accepted. In this way, a high level of security against unauthorized access from the third person can be achieved. Further, even if the third person tries to change preset data of the outdoor unit 1, this can be prevented beforehand.

The outdoor unit 1 can be installed in an outdoor location where anyone can access, and besides, the near-field communication does not require the so-called coupling operation of establishing connection with the information terminal 100. Therefore, a high level of security against unauthorized access from the third person described above is important for performing the operation of the air conditioning apparatus safely, by extension, for ensuring reliability of the air conditioning apparatus.

The certain time t1 can be defined as predetermined time by the computer program of the information terminal 100 even without changing the setting of the outdoor unit 1. Therefore, the setting work can be flexibly done, for example, by changing the constant time t1 depending on the user of the information terminal 100, etc.

Further, the constantly-prohibited state and the constantly-permitted state can be specified as the state of restriction by the switch module 40 in the present embodiment. For example, if the outdoor unit 1 is installed in such a place that is not easily accessible by the third person, etc., the constantly-permitted state may be specified as the state of restriction such that the setting can be made by the information terminal 100 without the process of cutoff and application of the power 50. Further, if the worker is less likely to make the setting via the first communication unit 20, for example, the constantly-prohibited state may be specified as the state of restriction such that the level of security can be further increased.

Since the first communication unit 20 is provided inside the air vent 4a, the radio waves transmitted from the information terminal 100 efficiently reach the first communication unit 20 through the air vent 4a without being distracted by the magnetic front plate 4. The radio waves transmitted from the first communication unit 20 also efficiently reach the information terminal 100 through the air vent 4a without being distracted by the magnetic front plate 4.

The worker only needs to bring the information terminal 100 closer to the air vent 4a and operate the information terminal 100, and does not have to do troublesome work such as opening and closing of the door. Therefore, the load on the worker can be reduced, and the work time can be shortened, accordingly.

Even if a number of outdoor units 1 are arranged along with each other and the side plates of the outdoor units about each other, since the first communication unit 20 is provided on the front side of the housing 2, data communication with the first communication unit 20 of each outdoor unit 1 can be easily and reliably performed.

The above-described embodiment is presented by way of example only and is not intended to limit the scope of the invention. Indeed, the novel embodiment described herein may be embodied in various other forms; furthermore, various omissions, substitutions and changes in the form of the embodiment may be made without departing from the spirit of the invention. The accompanying claims and their equivalents are intended to cover such forms or modifications as would fall within the scope and spirit of the invention.

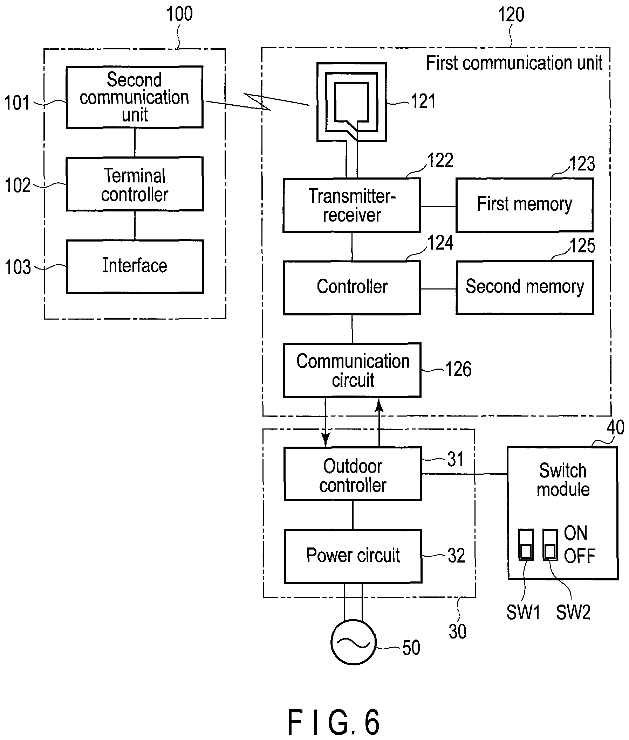

For example, in the above-described embodiment, the first communication unit 20 takes electrical power generated by electromagnetic induction which occurs when the antenna 21 receives radio waves, as the operating power of the first communication unit 20, and the controller 23 executes various processing for data communication. Here, the controller 23 may not operate on electrical power generated by electromagnetic induction but may operate on electrical power supplied from the outdoor unit circuit board 30 in some cases. In such a case, a structure shown in a block diagram of FIG. 6 may be applied. FIG. 6 is a block diagram showing the main structural elements of an outdoor unit setting system according to another embodiment. The same elements as those shown in FIG. 2 are denoted by the same reference numbers, and detailed description thereof will be omitted.

As shown in FIG. 6, a first communication unit 120 includes an antenna 121, a transmitter-receiver 122, a first memory 123, a controller 124, a second memory 125 and a communication circuit 126.

The antenna 121 transmits and receives radio waves. The transmitter-receiver 122 transmits and receives a signal via the antenna 121, and takes electrical power generated by electromagnetic induction which occurs when the antenna 121 receives radio waves, as operating power of the transmitter-receiver unit 122 and the first memory 123. Here, the first memory 123 is the so-called IC tag and temporarily stores various data which is transmitted to and received from the information terminal 100 via the transmitter-receiver 122 and various data which is transmitted to and received from the second memory 125 of the controller 124 via the transmitter-receiver 122.

The controller 124 operates on electrical power supplied from the outdoor unit circuit board 30. The second memory 125 stores a computer program necessary for the processing of the controller 124 and temporarily stores received data and transmitted data which are transmitted to and received from the first memory 123 and the outdoor controller 31.

The communication circuit 126 performs wired data communication between the controller 124 and the outdoor controller 31. According to this structure, even if the power 50 is not applied to the outdoor unit 1, the information terminal 100 can read data stored in the first memory 123 and write data to the first memory 123.

Although the first communication unit 20 is assumed to be arranged in the location corresponding to the second top air vent 4a of the front plate 4 in the above-described embodiment, the arrangement location is not limited to this and can be appropriately selected. For example, to further increase the level of security, the first communication unit 20 can also be arranged in a location corresponding to the lower air vent 4a through which the inside cannot be easily seen, as a matter of course.

Although the certain time is assumed to be about five to eight hours in the above-described embodiment, the time can be appropriately selected according to the type, number, etc., of the outdoor unit(s) 1 and the experience, skill, etc., of the worker, and can be set to 24 hours or 48 hours.

It is assumed in the above-described embodiment that, if the state of restriction is the normal state, the setting is prohibited after the time count t reaches the certain time t1. Here, one setting may be prohibited after the time count t reaches the certain time t1, but another setting may not be prohibited even after the time count t reaches the certain time t1. For example, a setting in which an unauthorized change thereto causes some trouble to the operation of the air conditioning apparatus may be prohibited after the time count t reaches the certain time t1, but a setting in which an unauthorized change thereto does not cause any trouble to the operation of the air conditioning apparatus may not be prohibited even after the time count t reaches the certain time t1. For example, the setting which causes some trouble to the operation of the air conditioning apparatus includes shutdown of the indoor unit, trial operation, setting of address codes of the indoor unit connected to the outdoor unit 1 and another outdoor unit, etc. Further, the setting which does not cause any trouble to the operation of the air conditioning apparatus includes readout of various information (for example, operating information and error information) related to the outdoor unit 1, another outdoor unit connected to the outdoor unit 1 and the indoor unit, etc.

The state of restriction is assumed to be specified by the switch module 40 in the above-described embodiment. However, the state of restriction may be stored in a memory provided in the outdoor unit circuit board 30, etc. In this case, this memory functions as a switch module, and the normal state, the constantly-prohibited state and the constantly-permitted state can be specified by changing the state of restriction stored in this memory.

The time information transmitted from the outdoor unit 1 to the information terminal 100 is assumed to indicate the time count t in the above-described embodiment. However, the time information may indicate the time when the certain time t1 elapses from the application of the power 50 to the outdoor unit 1. In this case, if the state of restriction is the normal state, the terminal controller 102 permits the setting until the time indicated by the time information comes and prohibits the setting after the time comes. Alternatively, the time information may be information indicating whether the setting is permitted or prohibited. In this case, the outdoor controller 31 transmits information indicating permission to the information terminal 100 if the time count t is less than the certain time t1, and transmits information indicating prohibition to the information terminal 100 if the time count t1 is greater than or equal to the certain time t1. Further, the terminal controller 102 notifies approval of the setting and executes the setting operation specified by the worker if receiving information indicating permission, and notifies disapproval of the setting and does not execute the setting operation if receiving information indicating prohibition. In addition to those described above, various other information can also be used as the time information.

### Reference numerals

- 1: outdoor unit
- 2: housing
- 3: left front plate
- 3A: upper left front plate
- 3a: air vent (air inlet)
- 4: right front plate
- 4A: upper right front plate
- 4B: lower right front plate
- 4a: air vent
- 5: right plate
- 5a: air vent (air inlet)
- 6: top plate
- 7: top plate
- 8: circular fan housing
- 9: circular fan housing
- 10: heat exchanger
- 11: outdoor fan
- 12: outdoor fan
- 19: component box
- 20: first communication unit
- 21: antenna
- 22: transmitter-receiver
- 23: controller
- 24: memory
- 25: communication circuit
- 30: circuit board
- 31: outdoor controller (first controller)
- 32: power circuit
- 40: switch module
- 50: power
- 100: information terminal
- 101: communication unit
- 102: terminal controller (second controller)
- 103: interface
- 120: first communication unit
- 121: antenna
- 122: transmitter-receiver
- 123: first memory
- 124: controller
- 125: second memory
- 126: communication circuit

## Claims

1. An outdoor unit setting system includes an outdoor unit comprising a first communication unit (20, 120), and an information terminal (100) comprising a second communication unit (101), and configured to make a setting of the outdoor unit by contactless communication between the first communication unit (20, 120) and the second communication unit (101), wherein the outdoor unit (1) comprises a first controller (31) configured to notify time information related to time elapsed from application of power (50) to the outdoor unit (1), to the information terminal (100) by the contactless communication, and the information terminal (100) comprises a second controller (102) configured to permit the setting of the outdoor unit (1) made by the information terminal (100) during a period until the elapsed time reaches certain time based on the time information notified from the outdoor unit (1).

2. The outdoor unit setting system of Claim 1, wherein the outdoor unit (1) further comprises a switch module (40) configured to specify constant prohibition of the setting of the outdoor unit (1), the first controller (31) notifies constant prohibition of the setting of the outdoor unit (1) to the information terminal (100) by the contactless communication, if constant prohibition of the setting of the outdoor unit (1) is specified by the switch module (40), and the second controller (102) rejects the setting of the outdoor unit (1) made by the information terminal (100) regardless of the time elapsed from application of power to the outdoor unit (1), if constant prohibition of the setting is notified from the outdoor unit (1).

3. The outdoor unit setting system of Claim 1, wherein the outdoor unit (1) further comprises a switch module (40) configured to specify constant permission of the setting of the outdoor unit (1), the first controller (31) notifies constant permission of the setting of the outdoor unit (1) by the contactless communication, if constant permission of the setting of the outdoor unit (1) is specified by the switch module (4), and the second controller (102) accepts the setting of the outdoor unit (1) made by the information terminal (100) regardless of the time elapsed from application of power (50) to the outdoor unit (1), if constant permission of the setting is notified from the outdoor unit (1).

4. An outdoor unit setting method for making a setting of an outdoor unit (1) by contactless communication between a first communication unit (20, 120) provided in the outdoor unit (1) and a second communication unit (101) provided in an information terminal (100), wherein the outdoor unit (1) notifies time information related to time elapsed from application of power (50) to the outdoor unit (1), to the information terminal (100) by the contactless communication, and the information terminal (100) permits or prohibits the setting of the outdoor unit (1) made by the information terminal (100)during a period until the elapsed time reaches certain time based on the time information notified from the outdoor unit (1).

5. The outdoor unit setting method of Claim 4, further comprising:
rejecting the setting of the outdoor unit (1) made by the information terminal (100) regardless of the time elapsed from application of power (50) to the outdoor unit (1), if constant prohibition of the setting of the outdoor unit (1) is specified by a switch module (40).

6. The outdoor unit setting method of Claim 4, further comprising:
accepting the setting of the outdoor unit (1) made by the information terminal (100) regardless of the time elapsed from application of power (50) to the outdoor unit (1), if constant permission of the setting of the outdoor unit (1) is specified by a switch module (40).

7. An outdoor unit of a refrigeration cycle apparatus, the outdoor unit comprising:
a communication unit (20, 120) configured to perform contactless communication with an information terminal (100); and
a controller (31) configured to notify time information related to time elapsed from application of power (50) to the outdoor unit (1), to the information terminal (100) by the contactless communication, and to accept the setting of the outdoor unit (1) made by the information terminal (100).

8. The outdoor unit of Claim 7, further comprising:
a switch module (40) configured to specify constant prohibition of the setting of the outdoor unit (1), wherein the controller (31) notifies the time information related to the time elapsed from application of power (50) to the outdoor unit (1), to the information terminal (100) by the contactless communication, and accepts the setting of the outdoor unit (1) made by the information terminal (100), if constant prohibition of the setting is not specified by the switch module (40), and the controller (102) rejects the setting of the outdoor unit (1) made by the information terminal (100) regardless of the time elapsed from application of power (50) to the outdoor unit (1), if constant prohibition of the setting is specified by the switch module (40).

9. The outdoor unit of Claim 7, further comprising:
a switch module (40) configured to specify constant permission of the setting of the outdoor unit (1), wherein the controller (31) notifies the time information related to the time elapsed from application of power (50) to the outdoor unit (1), to the information terminal (100) by the contactless communication, and accepts the setting of the outdoor unit (1) made by the information terminal (100), if constant permission of the setting is not specified by the switch module (40), and the controller (31) accepts the setting of the outdoor unit (1) made by the information terminal (1) regardless of the time elapsed from application of power (50) to the outdoor unit (1), if constant permission of the setting is specified by the switch module (40).

## Patentansprüche

1. Außeneinheit-Einstellsystem mit einer Außeneinheit, die eine erste Kommunikationseinheit (20, 120) umfasst, und einem Informationsterminal (100), das eine zweite Kommunikationseinheit (101) umfasst und so konfiguriert ist, dass es eine Einstellung der Außeneinheit durch kontaktlose Kommunikation zwischen der ersten Kommunikationseinheit (20, 120) und der zweiten Kommunikationseinheit (101) vornimmt, wobei die Außeneinheit (1) eine erste Steuerung (31) umfasst, die so konfiguriert ist, dass sie Zeitinformationen, die sich auf die Zeit beziehen, die seit dem Anlegen von Strom (50) an die Außeneinheit (1) verstrichen ist, an das Informationsterminal (100) durch die kontaktlose Kommunikation meldet, und das Informationsterminal (100) eine zweite Steuerung (102) umfasst, die so konfiguriert ist, dass sie die Einstellung der Außeneinheit (1), die durch das Informationsterminal (100) während eines Zeitraums vorgenommen wird, bis die verstrichene Zeit eine bestimmte Zeit erreicht, auf der Grundlage der von der Außeneinheit (1) gemeldeten Zeitinformation ermöglicht.

2. Außeneinheit-Einstellsystem nach Anspruch 1, wobei die Außeneinheit (1) ferner ein Schaltmodul (40) umfasst, das so konfiguriert ist, dass es ein konstantes Verbot der Einstellung der Außeneinheit (1) spezifiziert, wobei die erste Steuerung (31) das konstante Verbot der Einstellung der Außeneinheit (1) dem Informationsterminal (100) durch die berührungslose Kommunikation mitteilt, wenn das konstante Verbot der Einstellung der Außeneinheit (1) durch das Schaltmodul (40) vorgegeben ist, und die zweite Steuerung (102) die vom Informationsterminal (100) vorgenommene Einstellung der Außeneinheit (1) unabhängig von der seit dem Anlegen des Stroms (50) an die Außeneinheit (1) verstrichenen Zeit ablehnt, wenn das konstante Verbot der Einstellung von der Außeneinheit (1) gemeldet wird.

3. Außeneinheit-Einstellsystem nach Anspruch 1, wobei die Außeneinheit (1) ferner ein Schaltmodul (40) umfasst, das so konfiguriert ist, dass es eine konstante Erlaubnis der Einstellung der Außeneinheit (1) spezifiziert, wobei die erste Steuerung (31) die konstante Erlaubnis der Einstellung der Außeneinheit (1) durch die kontaktlose Kommunikation meldet, wenn die konstante Erlaubnis der Einstellung der Außeneinheit (1) durch das Schaltmodul (4) spezifiziert wird, und die zweite Steuerung (102) die Einstellung der Außeneinheit (1), die durch das Informationsterminal (100) vorgenommen wird, unabhängig von der Zeit, die seit dem Anlegen des Stroms (50) an die Außeneinheit (1) verstrichen ist, akzeptiert, wenn die konstante Erlaubnis der Einstellung von der Außeneinheit (1) gemeldet wird.

4. Verfahren zum Einstellen einer Außeneinheit (1) durch kontaktlose Kommunikation zwischen einer ersten Kommunikationseinheit (20, 120), die in der Außeneinheit (1) vorgesehen ist, und einer zweiten Kommunikationseinheit (101), die in einem Informationsterminal (100) vorgesehen ist, wobei die Außeneinheit (1) Zeitinformationen, die sich auf die Zeit beziehen, die seit dem Anlegen von Strom (50) an die Außeneinheit (1) verstrichen ist, an das Informationsterminal (100) durch die kontaktlose Kommunikation meldet, und das Informationsterminal (100) die Einstellung der Außeneinheit (1), die durch das Informationsterminal (100) vorgenommen wird, während eines Zeitraums, bis die verstrichene Zeit eine bestimmte Zeit erreicht, basierend auf der Zeitinformation, die von der Außeneinheit (1) gemeldet wird, erlaubt oder verbietet.

5. Verfahren zum Einstellen der Außeneinheit nach Anspruch 4, ferner umfassend: Ablehnen der durch das Informationsterminal (100) vorgenommenen Einstellung der Außeneinheit (1) unabhängig von der seit dem Anlegen des Stroms (50) an die Außeneinheit (1) verstrichenen Zeit, wenn ein konstantes Verbot der Einstellung der Außeneinheit (1) durch ein Schaltmodul (40) vorgegeben ist.

6. Verfahren zum Einstellen der Außeneinheit nach Anspruch 4, ferner umfassend: Akzeptieren der durch das Informationsterminal (100) vorgenommenen Einstellung der Außeneinheit (1) unabhängig von der Zeit, die seit dem Anlegen des Stroms (50) an die Außeneinheit (1) verstrichen ist, wenn eine konstante Erlaubnis der Einstellung der Außeneinheit (1) durch ein Schaltmodul (40) vorgegeben ist.

7. Außeneinheit eines Kühlkreislaufgeräts, wobei die Außeneinheit umfasst:
eine Kommunikationseinheit (20, 120), die so konfiguriert ist, dass sie eine kontaktlose Kommunikation mit einem Informationsterminal (100) durchführt; und
eine Steuerung (31), die so konfiguriert ist, dass sie dem Informationsterminal (100) durch die kontaktlose Kommunikation Zeitinformationen mitteilt, die sich auf die Zeit beziehen, die seit dem Anlegen von Strom (50) an die Außeneinheit (1) verstrichen ist, und dass sie die von dem Informationsterminal (100) vorgenommene Einstellung der Außeneinheit (1) akzeptiert.

8. Außeneinheit nach Anspruch 7, ferner umfassend:
ein Schaltmodul (40), das so konfiguriert ist, dass es ein konstantes Verbot der Einstellung der Außeneinheit (1) spezifiziert, wobei die Steuerung (31) die Zeitinformation, die auf die Zeit bezogen ist, die seit dem Anlegen des Stroms (50) an die Außeneinheit (1) verstrichen ist, durch die kontaktlose Kommunikation an das Informationsterminal (100) übermittelt und die von dem Informationsterminal (100) vorgenommene Einstellung der Außeneinheit (1) akzeptiert, wenn ein konstantes Verbot der Einstellung nicht durch das Schaltmodul (40) vorgegeben ist, und die Steuerung (102) die durch das Informationsterminal (100) vorgenommene Einstellung der Außeneinheit (1) unabhängig von der seit dem Anlegen des Stroms (50) an die Außeneinheit (1) verstrichenen Zeit ablehnt, wenn ein konstantes Verbot der Einstellung durch das Schaltmodul (40) vorgegeben ist.

9. Außeneinheit nach Anspruch 7, ferner aufweisend:
ein Schaltmodul (40), das so konfiguriert ist, dass es eine konstante Erlaubnis der Einstellung der Außeneinheit (1) spezifiziert, wobei die Steuerung (31) die Zeitinformation, die sich auf die Zeit bezieht, die seit dem Anlegen des Stroms (50) an die Außeneinheit (1) verstrichen ist, durch die kontaktlose Kommunikation an das Informationsterminal (100) übermittelt und die von dem Informationsterminal (100) vorgenommene Einstellung der Außeneinheit (1) akzeptiert, wenn eine konstante Erlaubnis der Einstellung nicht durch das Schaltmodul (40) spezifiziert ist, und die Steuerung (31) die durch das Informationsterminal (1) vorgenommene Einstellung der Außeneinheit (1) unabhängig von der seit dem Anlegen des Stroms (50) an die Außeneinheit (1) verstrichen Zeit akzeptiert, wenn eine konstante Erlaubnis der Einstellung durch das Schaltmodul (40) spezifiziert ist.

## Revendications

1. Système de réglage d'unité extérieure comportant une unité extérieure comprenant une première unité de communication (20, 120), et un terminal d'informations (100) comprenant une deuxième unité de communication (101), et configuré pour effectuer un réglage de l'unité extérieure par communication sans contact entre la première unité de communication (20, 120) et la deuxième unité de communication (101), dans lequel l'unité extérieure (1) comprend un premier dispositif de commande (31) configuré pour notifier au terminal d'informations (100), par la communication sans contact, des informations temporelles liées à un temps écoulé depuis une application d'une puissance (50) à l'unité extérieure (1), et le terminal d'informations (100) comprend un deuxième dispositif de commande (102) configuré pour permettre le réglage de l'unité extérieure (1) effectué par le terminal d'informations (100) pendant une période jusqu'à ce que le temps écoulé atteigne un certain temps basé sur les informations temporelles notifiées par l'unité extérieure (1).

2. Système de réglage d'unité extérieure de la revendication 1, dans lequel l'unité extérieure (1) comprend en outre un module de commutation (40) configuré pour spécifier une interdiction constante du réglage de l'unité extérieure (1), le premier dispositif de commande (31) notifie au terminal d'informations (100), par la communication sans contact, une interdiction constante du réglage de l'unité extérieure (1) si une interdiction constante du réglage de l'unité extérieure (1) est spécifiée par le module de commutation (40), et le deuxième dispositif de commande (102) rejette le réglage de l'unité extérieure (1) effectué par le terminal d'informations (100) indépendamment du temps écoulé depuis l'application de puissance à l'unité extérieure (1) si une interdiction constante du réglage est notifiée par l'unité extérieure (1).

3. Système de réglage d'unité extérieure de la revendication 1, dans lequel l'unité extérieure (1) comprend en outre un module de commutation (40) configuré pour spécifier une permission constante du réglage de l'unité extérieure (1), le premier dispositif de commande (31) notifie une permission constante du réglage de l'unité extérieure (1) par la communication sans contact si une permission constante du réglage de l'unité extérieure (1) est spécifiée par le module de commutation (4), et le deuxième dispositif de commande (102) accepte le réglage de l'unité extérieure (1) effectué par le terminal d'informations (100) indépendamment du temps écoulé depuis l'application d'une puissance (50) à l'unité extérieure (1) si une permission constante du réglage est notifiée par l'unité extérieure (1).

4. Procédé de réglage d'unité extérieure pour effectuer un réglage d'une unité extérieure (1) par communication sans contact entre une première unité de communication (20, 120) prévue dans l'unité extérieure (1) et une deuxième unité de communication (101) prévue dans un terminal d'informations (100), dans lequel l'unité extérieure (1) notifie au terminal d'informations (100), par la communication sans contact, des informations temporelles liées à un temps écoulé depuis l'application d'une puissance (50) à l'unité extérieure (1), et le terminal d'informations (100) autorise ou interdit le réglage de l'unité extérieure (1) effectué par le terminal d'informations (100) pendant une période jusqu'à ce que le temps écoulé atteigne un certain temps basé sur les informations temporelles notifiées par l'unité extérieure (1).

5. Procédé de réglage d'unité extérieure de la revendication 4, comprenant en outre :
le rejet du réglage de l'unité extérieure (1) effectué par le terminal d'informations (100) indépendamment du temps écoulé depuis l'application d'une puissance (50) à l'unité extérieure (1) si une interdiction constante du réglage de l'unité extérieure (1) est spécifiée par un module de commutation (40).

6. Procédé de réglage d'unité extérieure de la revendication 4, comprenant en outre :
l'acceptation du réglage de l'unité extérieure (1) effectué par le terminal d'informations (100) indépendamment du temps écoulé depuis l'application d'une puissance (50) à l'unité extérieure (1) si une permission constante du réglage de l'unité extérieure (1) est spécifiée par un module de commutation (40).

7. Unité extérieure d'un appareil à cycle de réfrigération, l'unité extérieure comprenant :
une unité de communication (20, 120) configurée pour réaliser une communication sans contact avec un terminal d'informations (100) ; et
un dispositif de commande (31) configuré pour notifier au terminal d'informations (100), par la communication sans contact, des informations temporelles liées à un temps écoulé depuis l'application d'une puissance (50) à l'unité extérieure (1), et pour accepter le réglage de l'unité extérieure (1) effectué par le terminal d'informations (100).

8. Unité extérieure de la revendication 7, comprenant en outre :
un module de commutation (40) configuré pour spécifier une interdiction constante du réglage de l'unité extérieure (1), dans laquelle le dispositif de commande (31) notifie au terminal d'informations (100), par la communication sans contact, les informations temporelles liées au temps écoulé depuis l'application d'une puissance (50) à l'unité extérieure (1), et accepte le réglage de l'unité extérieure (1) effectué par le terminal d'informations (100) si une interdiction constante du réglage n'est pas spécifiée par le module de commutation (40), et le dispositif de commande (102) rejette le réglage de l'unité extérieure (1) effectué par le terminal d'informations (100) indépendamment du temps écoulé depuis l'application d'une puissance (50) à l'unité extérieure (1) si une interdiction constante du réglage est spécifiée par le module de commutation (40).

9. Unité extérieure de la revendication 7, comprenant en outre :
un module de commutation (40) configuré pour spécifier une permission constante du réglage de l'unité extérieure (1), dans laquelle le dispositif de commande (31) notifie au terminal d'informations (100), par la communication sans contact, les informations temporelles liées au temps écoulé depuis l'application d'une puissance (50) à l'unité extérieure (1), et accepte le réglage de l'unité extérieure (1) effectué par le terminal d'informations (100), si une permission constante du réglage n'est pas spécifiée par le module de commutation (40), et le dispositif de commande (31) accepte le réglage de l'unité extérieure (1) effectué par le terminal d'informations (1) indépendamment du temps écoulé depuis l'application d'une puissance (50) à l'unité extérieure (1) si une permission constante du réglage est spécifiée par le module de commutation (40).
